# EUROPÄISCHE PATENTSCHRIFT

(11) **EP 1 744 879 B1**
(45) Veröffentlichungstag und Bekanntmachung des Hinweises auf die Patenterteilung: **02.12.2009**
(21) Anmeldenummer: 05744993.6
(22) Anmeldetag: 19.04.2005
(51) Int. Cl.: B32B 27/32

(54) **WÄRMESCHRUMPFBARE MEHRSCHICHTFOLIEN**
HEAT-SHRINKABLE MULTILAYER FILMS
FEUILLES MULTICOUCHES THERMORETRACTABLES

(30) Priorität: 06.05.2004 DE 102004023023
(43) Veröffentlichungstag der Anmeldung: 24.01.2007
(73) Patentinhaber: CFS Kempten GmbH, 87437 Kempten (DE)
(72) Erfinder: BERNIG, Walter, 87549 Rettenberg (DE); SCHWEITZER, Christoph, 87634 Obergünzburg (DE)
(74) Vertreter: Kutzenberger, Helga
(86) Internationale Anmeldenummer: PCT/EP2005/004174
(87) Internationale Veröffentlichungsnummer: WO 2005/108068

(56) Entgegenhaltungen:
- WO-A-98/36903
- DE-A1- 3 626 809

## Beschreibung

Die vorliegende Erfindung betrifft wärmeschrumpfbare Mehrschichtfolien umfassend eine Oberflächenschicht basierend auf wenigstens einem olefinischen Polymeren und/oder Copolymeren, einer Schicht basierend auf einer Mischung aus einem Ionomer mit einem MFI bis maximal 4dg/min und einem Ionomer mit einem MFI > 4dg/min, einer Barriereschicht basierend auf Polyvinylidenchlorid oder einem Vinylidenchloridcopolymeren, einer Schicht basierend auf der genannten Ionomermischung oder einem olefinischen Copolymeren und einer Siegelschicht aus wenigstens einem Polyolefin oder olefinischen Copolymeren, vorzugsweise als Schlauchbeutel, deren Verwendung als Verpackung bzw. die entsprechenden Schlauchbeutelverpackungen.

Biaxial orientierte, wärmeschrumpfbare Mehrschichtfolien werden bei der Verpackung von Lebensmitteln, insbesondere von verderblichen Lebensmitteln wie Geflügel oder Frischfleisch verwendet, wobei diese Mehrschichtfolien vorzugsweise eine Sauerstoffbarriereschicht aufweisen. Wärmeschrumpfbare Mehrschichtfolien haben die Eigenschaft, zu ihrem ursprünglichen, nicht orientierten Abmessungen zurückzuschrumpfen, wenn sie bis zu ihrem Erweichungspunkt erwärmt werden. Biaxial orientierte Mehrschichtfolien sind sowohl in Längs- als auch in Querrichtung gemäß ihrem Herstellungsprozess gereckt und weisen vorzugsweise mindestens eine Schrumpfung von 35 % sowohl in Längs- bzw. Maschinenrichtung als auch in Querrichtung, d. h. entgegen der Maschinenrichtung, auf.

Bereits kommerziell verwendete, biaxial orientierte, wärmeschrumpfbare Mehrschichtfolien weisen bevorzugt eine Außenschicht aus einem Ethylen/Vinylacetatcopolymeren ggf. gemischt mit einem Polyethylen, vorzugsweise einem LLDPE, und als Sauerstoffbarriereschicht eine Schicht basierend auf Polyvinylidenchlorid auf, da diese thermoplastischen Materialien ein ausgezeichnetes Schrumpfverhalten aufweisen. Solche Mehrschichtfolien können als Außenschicht auch eine Schicht aus lonomen aufweisen (DE-A-3626809). Darüber hinaus sind aus WO 98/36903 biaxial orientierte Mehrschichfolien bekannt, die eine innen liegende Ionomenschicht und eine Barriereschicht aus Polyvinylidenchlorid umfassen.

Nachteilig bei den kommerziell verwendeten Mehrschichtfolien ist ihre ggf. nicht ausreichende Festigkeit, d. h. nicht ausreichende Durchstoßfestigkeit bei mechanischer Beanspruchung der Schrumpffolie, wie z. B. beim Verpacken von Lebensmitteln mit herausragenden Knochen. Um die Durchstoßfestigkeit daher zu verbessern, wurden bereits wärmeschrumpffähigen Mehrschichtfolien mit einer lonomerschicht basierend auf einem Ethylen/Acrylsäure-Copolymeren, das teilweise als Natriumsalz vorliegt, ausgerüstet. Um aber eine ausreichende Verbundhaftung zwischen einer solchen Ionomerschicht und einer Barriereschicht auf Basis von Polyvinylidenchlorid zu erzielen, war es aber notwendig, eine übliche Haftvermittlerschicht einzufügen. Diese Maßnahme bedeutet aber nicht nur höhere Material- und Herstellungskosten für solche schrumpfbaren Mehrschichtfolien, sondern auch größere Dicken, was bei wärmeschrumpfbaren Mehrschichtfolien eher unerwünscht ist. Außerdem sind aufwendigere Extrusionseinrichtungen notwendig.

Aufgabe der vorliegenden Erfindung war es daher, eine wärmeschrumpfbare Mehrschichtfolie zur Verfügung zu stellen, die eine verbesserte mechanische Festigkeit, insbesondere eine höhere Durchstoßfestigkeit bei gleichzeitig ausreichender Verbundhaftung ohne Einsatz einer Haftvermittlerschicht zwischen der die Festigkeit verbessernden Ionomerschicht und der Barriereschicht aufweist und somit dünner als eine entsprechende kommerziell verwendete Mehrschichtfolie ist.

Die Aufgabe wird durch das Zurverfügungstellen der erfindungsgemäßen, wärmeschrumpffähigen, biaxial orientierten Mehrschichtfolie gelöst, die folgenden Schichtaufbau umfasst:
a) eine Oberflächenschicht basierend auf wenigstens einem olefinischen Polymeren und/oder Copolymeren,
b) eine Schicht basierend auf einer Mischung aus einem Ionomer mit einem MFI bis maximal 4 dg/min und einem Ionomer mit einem MFI > 4dg/min,
c) eine Barriereschicht basierend auf Polyvinylidenchlorid oder einem Vinylidenchloridcopolymeren
d) eine Schicht basierend auf der lonomermischung gemäß Schicht b) oder einem üblichen Haftvermittler basierend auf einem olefinischen Copolymere
e) eine Siegelschicht aus wenigstens einem Polyolefin oder olefinischen Copolymeren.

Die Schicht a), die üblicherweise bei der erfindungsgemäßen Mehrschichtfolie als Außenschicht einer Verpackung, wie z. B. eines Schrumpfbeutels, dient, basiert vorzugsweise auf einem Polyethylen (PE), besonders bevorzugt auf einem PE mit einer Dichte < 0,92 g/cm³ oder m-PE (metallocen-Polyethylen) und/oder einem Ethylen-Copolymer, besonders bevorzugt einem Ethylen/Vinylacetat-Copolymeren. Ganz besonders bevorzugt basiert die Schicht a) auf einer Mischung aus einem LLDPE (linearem Polyethylen niedriger Dichte) oder m-PE und einem EthylenNinylacetat-Copolymeren, wobei die Mischung vorzugsweise aus 70 bis 90 Gew.% LLDPE und/oder m-PE, 10 bis 30 Gew. % EthylenNinylacetat-Copolymer und ggf. bis zu 5 Gew.% üblicher Additive, jeweils bezogen auf das Gesamtgewicht der Schicht a) mit 100 Gew. % besteht.

Unter üblichen Additiven werden Anti-Blockmittel, Antistatika und/oder Gleitmittel verstanden.

Vorzugsweise ist die Dicke der Schicht a) kleiner als 20% der Gesamtdicke der erfindungsgemäßen, wärmeschrumpffähigen Mehrschichtfolie. Besonders bevorzugt liegt die Dicke dieser Schicht im Bereich von 5 bis 10 µm.

Die Schicht b), die sich an die Außenschicht a) anschließt und mit der Barriereschicht c) verbunden ist, basiert auf einer Mischung von lonomeren, d. h. einer Mischung aus Ethylen/Acrylsäure-Copolymeren oder Ethylen/Methacrylsäure-Copolymeren, die jeweils zumindest teilweise, vorzugsweise bis 35 %, als Salz, vorzugsweise als Na- oder Zn-salz, vorliegen, wobei eine Mischungskomponente vorzugsweise einem MFI von 1,5 bis 4 dg/min, besonders bevorzugt bis maximal 2dg/min, und die zweite Mischungskomponente einen MFI bis maximal 5dg/min aufweist. Die beiden Mischungskomponenten liegen in der Mischung in einer Menge von 35 bis 65 Gew. % bzw. 65 bis 35 Gew. %, jeweils bezogen auf das Gesamtgewicht der Schicht b) mit 100 Gew%, vor.

Ganz besonders bevorzugt soll die Mischung einen MFI im Bereich von 1,5 bis 4 dg/min aufweisen.

Der Schmelzindex (MFI) wird immer nach ASTM 1238 (bei 190 °C 2,16 kg/10 min) bestimmt.

Die Dicke der Schicht b) liegt vorzugsweise im Bereich von 5 bis 10 µm, ganz besonders bevorzugt im Bereich von 6 bis 8 µm.

Die Barriereschicht c) basiert auf einem Polyvinylidenchlorid oder einem Vinylidenchlorid/Methacrylsäure-Copolymeren mit bis zu 10 Gew % Methacrylsäureeinheiten.

Die Schicht c) hat vorzugsweise eine Dicke von 3 bis 8 µm, ganz besonders eine Dicke von 4 bis 6 µm.

Sie verleiht der erfindungsgemäßen wärmeschrumpfbaren Mehrschichtfolie eine Sauerstoffdurchlässigkeit von maximal 20 cc/m².d.bar, vorzugsweise im Bereich von 7 bis 15 cc/m².d.bar.

Die Schicht d) basiert vorzugsweise auf einem olefinischen Copolymeren, besonders bevorzugt auf einem Ethylen-Copolymeren, ganz besonders bevorzugt einem Ehtylen/Vinylacetatcopolymeren, wodurch die Festigkeit der erfindungsgemäßen Folie noch erhöht werden kann.

Aus produktionstechnischen Gründen ist es aber auch möglich, die Schicht d) aus derselben lonomermischung wie die Schicht b) zu fertigen.

Vorzugsweise weist die Schicht d) eine Dicke von 5 bis 10 µm, besonders bevorzugt eine Dicke im Bereich von 6 bis 9 µm auf.

Sofern in der Außenschicht a) bzw. in der Schicht d) ein EthylenNinylacetat-Copolymer vorlegt, besteht dieses Copolymer aus vorzugsweise 10 bis 30 mol % besonders bevorzugt aus 12 bis 20 mol % Vinylacetateinheiten.

Die Schicht e), die als Siegelschicht dient und in einer Verpackung aus der erfindungsgemäßen Mehrschichtfolie die dem Füllgut zugewandte Schicht darstellt, basiert auf wenigstens einem Polyolefin oder olefinischen Copolymeren, vorzugsweise wenigstens einem Polyethylen, besonders bevorzugt auf einer Mischung von m-PE (metallocen Polyethylen), besonders bevorzugt mit einer Dichte gleich oder größer 0,9 g/cm³, und einem LLDPE mit einer Dichte gleich oder größer 0,9 g/cm³. Vorzugsweise enthält die Mischung 70 bis 85 Gew. % m- PE, 30 bis 15 Gew. % LLDPE und ggf. bis zu 5 Gew. % üblicher Additive, jeweils bezogen auf das Gesamtgewicht der Schicht e) mit 100 Gew. %. Die Schicht e) kann auch auf wenigstens einem Polypropylen und/oder Propylencopolymeren, vorzugsweise einem Proppylen/Ethylen-Copolymeren, basieren.

Als Additive werden vorzugsweise Anti-Blockmittel, Antistatika und/oder Gleitmittel eingesetzt.

Die Dicke der Siegelschicht beträgt mindestens 25 %., vorzugsweise bis zu 35 % der Gesamtdicke der erfindungsgemäßen Mehrschichtfolie. Besonders bevorzugt liegt die Dicke bei wenigstens 10 µm, ganz besonders bevorzugt im Bereich von 10 bis 20 µm.

Die Dickenangaben verstehen sich als die Dicke der jeweiligen Schicht der erfindungsgemäßen Mehrschichtfolie nach der Längs- und Querorientierung.

Die erfindungsgemäße Mehrschichtfolie wird vorzugsweise nach dem Folienblasverfahren durch Co-Extrusion wie z. B. in der US-A-3,456,044 beschrieben, hergestellt. Dabei ist es aber auch möglich, zunächst nur die Schicht a) als Schlauch zu extrudieren und die darauffolgenden Schichten durch eine Co-Extrusion aufzubringen oder eine beliebige Unterschichtkombination als Schlauchfolie zunächst zu extrudieren und unmittelbar anschließend mit den verbleibenden Schichten durch Extrusion zu verbinden.

Weiterhin ist es möglich, die erfindungsgemäße Mehrschichtfolie nach dem chillroll-Verfahren mit Längs- und Querorientierung herzustellen.

Bei der Herstellung wird die Folie vorzugsweise in Maschinenrichtung, d. h. längs in einem Verhältnis von 1:3 bis 1:5, besonders bevorzugt von 1:3,5 bis 1:4,5 und quer zur Maschinenrichtung, in einem Verhältnis von 1:3 bis 1:5, besonders bevorzugt 1:3,5 bis 1:4,5, orientiert.

Bei der erfindungsgemäßen Mehrschichtfolie können zur Verbesserung ihrer Abnutzung - und/oder Durchstoßfestigkeit eine oder alle Schichten der erfindungsgemäßen Mehrschichtfolie vernetzt werden. Diese Vernetzung kann unter Verwendung von β-Strahlung (hochenergetischer Elektronen) und dgl. erreicht werden. Die Bestrahlungsquelle kann ein beliebiger Elektronenstrahlgenerator sein, welcher in einem Bereich von ungefähr 150 kV bis ungefähr 300 kV arbeitet. Die Bestrahlung wird üblich bei einer Dosis bis zu 60 kGy vorgenommen, wobei eine bevorzugte Dosis im Bereich von 30 kGy bis 50 kGy liegt. Wie bereits erwähnt, kann eine solche Bestrahlung auf die gesamten Folie oder auf einzelne Schichten wie z. B. die Außenschicht beschränkt werden.

Die zum Schichtaufbau zum Einsatz kommenden Polymeren sind Handelsprodukte und im Stand der Technik hinlänglich beschrieben. Sie werden üblicherweise zur Herstellung der erfindungsgemäßen Mehrschichtfolien als Pellets bzw. Granulate soweit notwendig in üblichen Mischapparaturen gemischt und durch Schmelzen vorzugsweise mit Hilfe von Extrudern in die gewünschte Endform gebracht. Wie bereits erwähnt, ist die Herstellung nach dem Folienblasverfahren bevorzugt, wobei als Extruder Extruder mit Co-Extruderdüsen zum Einsatz kommen, die die Ausbildung eines Schlauches gewährleisten. Die Verarbeitungstemperaturen ,insbesondere bei der Extrusion, sind dem Fachmann bekannt und werden mit dem Zurverfügungstellen der Kunststoffe im allgemeinen angegeben.

Die erfindungsgemäßen Mehrschichtfolien eignen sich hervorragend als Verpackungsmaterial, insbesondere als schrumpfbare Schrumpfbeutel mit ausgezeichneten optischen und mechanischen Eigenschaften. Ein weiterer Gegenstand der Erfindung ist die Verwendung der erfindungsgemäßen Mehrschichtfolien zum Verpacken von Gütern unterschiedlichster Art, vorzugsweise von-Lebensmitteln, daraus hergestellte Verpackungen; vorzugsweise Schlauchbeutelverpackungen.

### Methode zur Prüfung der Verbundhaftung nach dem Schrumpf der Folie

### Benötigte Hilfsmittel

Zu prüfendes Material erfindungsgemäße (Mehrschichtfolie)
Klotz (Größe BxHxT = 150 mm x 120 mm x 30mm)
Folienmesser
Rasierklinge
Tauchbad mit einer Wassertemperatur von 93°C
Ethanol
IR-Spektrometer

### Durchführung

Von dem zu prüfenden, erfindungsgemäßen Mehrschichtfolienschlauch wird ein ca. 130 mm langes Stück abgeschnitten und der Schlauch an einer Faltnaht aufgeschlitzt. Der Klotz wird mit seiner längeren Schmalseite auf die verbleibende Faltnaht des Schlauches so gelegt, dass die beiden Folienseiten den Klotz von außen umschließen und die Folienenden über dem Klotz gehalten werden. Die Folie darf nicht über die Ecken des Klotzes hinausstehen.

Die Schrumpfung der Folie wird durch Eintauchen des Klotzes mit Folie für 6 sec in 93°C (± 1°C) heißem Wasser durchgeführt. Es werden sechs Muster der Mehrschichtfolie geschrumpft. An möglichst faltenfreien Stellen werden jeweils 15 mm breite Folien-Prüfstreifen (quer zu Maschinenlaufrichtung) herausgeschnitten, die im geschrumpften Bereich liegen. 6 Prüfstreifen werden benötigt. An der Prüfstelle wird mit Hilfe einer Rasierklinge die Folie angeritzt und mit Ethanol der Verbund angelöst und so sechs Prüfstreifen mit einer Trennung zwischen Schicht b) und Schicht c) vorbereitet. Die Prüfung der Trennung erfolgt mit Hilfe eines IR-Spektrometer. Im Anschluss werden die sechs Prüfstreifen jeweils an der Trennstelle mit Hilfe der Universalzugprüfmaschine UTS 2 (Software Programm Verbundhaftung entsprechend DIN 53357) auf Verbundfestigkeit (Verbundhaftung) geprüft. Der Abzugswinkel beträgt jeweils 90°. Das Ergebnis wird elektronisch erfasst. Der Meßwert der Verbundhaftung wird in N/15 mm angegeben.

### Methode zur Prüfung der Schrumpffähigkeit

Zur Messung der Schrumpffähigkeit einer erfindunggemäßen Folie wird auf dem zu prüfenden Folienmuster ein Fadenkreuz 10 x 10 cm mit einem Folienstift aufgezeichnet, wobei ein Balken in die Maschinenrichtung (md), d. h. Extrusionsrichtung und der zweite Balken des Fadenkreuzes quer zur Maschinenrichtung (cma) gezeichnet wird. Das Wasserbad, in das das Folienmuster für 6 sec eingetaucht wird, hat eine Temperatur von 93 °C .

Nach 6 sec wird das Muster entnommen und durch Ausmessen der Verkürzung des Fadenkreuzes für die jeweilige Richtung in % angegeben.

### Beispiele

### Beispiel 1

Eine erfindungsgemäße Mehrschichtfolie mit folgendem Schichtaufbau:
a) eine Oberflächenschicht aus 81 Gew. % LLDPE mit einer Dichte von 0,911 g/cm³, 15 Gew. % eines Ethylen/Vinylacetat-Copolymeren mit 28 mol % Vinylacetat und 4 Gew. % eines Antiblockmittels und einer Dicke von 8 µm
b) eine Schicht aus einer Mischung aus 50 Gew. % eines Ionomers (Surlyn^{®} der Firma Du Pont) mit einem MFI von 1,3 dg/min und 50 Gew. % eines Ionomers (Surlyn^{®} der Firma Du Pont) mit einem MFI von 4,3 dg/min, das jeweils zu 35 % als Na-Salz vorlag, und einer Dicke von 7 µm
c) eine Barriereschicht basierend auf Polyvinylidenchlorid (Ixan PVS der Firma Solvin GmbH & Co. KG) mit einer Dicke von 5 µm
d) eine Schicht aus dem Ethylen/Vinylacetat-Copolymer, das identisch ist mit dem Copolymeren in Schicht a), mit einer Dicke von 8 µm und
e) eine Siegelschicht aus einer Mischung aus 73 Gew. % Polyethylen mit einer Dichte von 0,895 g/cm³, 24 Gew. % eines LLDPE mit einer Dichte von 0,911 g/cm³ und 3 Gew. % eines Antiblockmittels und mit einer Dicke von 15 µm;
wurde mit Hilfe eines Blasfoliencoextrusionsverfahrens unter einer Orientierung von 1:4 sowohl in Maschinenrichtung als auch quer dazu hergestellt. Die Mehrschichtfolie wurde mit Hilfe von Elektronenstrahlung bei 190 kV mit einer Dosis von 50 kGy vernetzt.

Die Messung der Schrumpffähigkeit erfolgte nach der vorstehend angegebenen Methode und betrug ungefähr 40 %.

Die Messung der Verbundhaftung, gemessen nach der vorstehend angegebenen Methode, betrug 2,0 N/15 mm.

### Vergleichsbeispiel 1

Wie in Beispiel 1 angegeben wurde eine Mehrschichtfolie mit identischem Aufbau mit Ausnahme der Schicht b) hergestellt. Die Schicht b) wurde aus einem lonomer (Sudyn^{®}) mit einem MFI von 1,0 dg/min hergestellt. Die jeweiligen Schichtdicken, die Orientierung und Vernetzung entsprachen der Mehrschichtfolie gemäß Beispiel 1.

Die Schrumpffähigkeit wurde nach der vorstehend angegebenen Methode bestimmt und betrug ungefähr 40 %.

Die Verbundhaftung gemessen nach der vorstehend angegebenen Methode bestimmt, betrug nur 0,121 N/15 mm.

## Patentansprüche

1. Biaxial orientierte, wärmeschrumpfbare Mehrschichtfolie umfassend folgenden Schichtaufbau:
a) eine Oberflächenschicht basierend auf wenigstens einem olefinischen Polymeren und/oder Copolymeren,
b) eine Schicht basierend auf einer Mischung aus einem Ionomer mit einem MFI bis maximal 4 dg/min und einem Ionomer mit einem MFI > 4dg/min,
c) eine Barriereschicht basierend auf Polyvinylidenchlorid oder einem Vinylidenchlorid-Copolymeren
d) eine Schicht basierend auf einer Ionomermischung gemäß Schicht b) oder einem olefinischen Copolymer,
e) eine Siegelschicht basierend auf wenigstens einem Polyolefin und/oder olefinischen Copolymeren.

2. Mehrschichtfolie nach Anspruch 1, **dadurch gekennzeichnet, dass** die Schicht a) als olefinisches Polymer ein Polyethylen, vorzugsweise ein Polyethylen mit einer Dichte < 0,92 g/cm³ oder m-PE, und/oder als olefinisches Copolymer ein Ethylencopolymer, vorzugsweise ein Ethylen/Vinylacetat-Copolymer, enthält.

3. Mehrschichtfolie nach Anspruch 1 oder 2, **dadurch gekennzeichnet, dass** die Schicht a) auf einer Mischung aus LLDPE und/oder m-PE und Ethylen/Vinylacetat-Copolymer basiert.

4. Mehrschichtfolie nach Anspruch 3, **dadurch gekennzeichnet, dass** die Mischung aus 70 bis 90 Gew. % LLDPE und/oder m-PE, 10 bis 30 Gew. % Ethylen/Vinylacetat-Copolymer und ggf. bis zu 5 Gew. % üblicher Additive, jeweils bezogen auf das Gesamtgewicht der Schicht a) mit 100 Gew %, aufgebaut ist.

5. Mehrschichtfolie nach einem der Ansprüche 1 bis 4, **dadurch gekennzeichnet, dass** die Schicht a) eine Dicke aufweist, die weniger als 20 % der Gesamtdicke der Mehrschichtfolie ist.

6. Mehrschichtfolie nach einem der Ansprüche 1 bis 5, **dadurch gekennzeichnet, dass** die Schicht b) als lonomere Ethylen/Acrylsäure-Copolymere oder Ethylen/Methacrylsäure-Copolymeren, die jeweils zumindest teilweise als Natrium oder Zn-salz vorliegen, enthält.

7. Mehrschichtfolie nach einem der Ansprüche 1 bis 6, **dadurch gekennzeichnet, dass** eine Ionomer einen MFI bis maximal 2dg/min und das zweite Ionomer einen MFI bis maximal 5 dg/min aufweist.

8. Mehrschichtfolie nach einem der Ansprüche 1 bis 7, **dadurch gekennzeichnet, dass** die Mischung der Schicht b) aus 35 bis 65 Gew. % des einen lonomeren, und 65 bis 35 Gew. % des zweiten lonomeren besteht.

9. Mehrschichtfolie nach einem der Ansprüche 1 bis 8, **dadurch gekennzeichnet, dass** die Schicht b) eine Dicke von 5 bis 10 µm aufweist.

10. Mehrschichtfolie nach einem der Ansprüche 1 bis 9, **dadurch gekennzeichnet, dass** die Schicht c) auf einem Polyvinylidenchlorid oder einem Vinylidenchlorid/Methacrylsäurecopolymer basiert.

11. Mehrschichtfolie nach einem der Ansprüche 1 bis 10, **dadurch gekennzeichnet, dass** die Schicht c) eine Dicke von 3 bis 8 µm aufweist.

12. Mehrschichtfolie nach einem der Ansprüche 1 bis 11, **dadurch gekennzeichnet, dass** die Schicht d) auf einer Ionomermischung entsprechend der Ionomermischung der Schicht b) oder auf einem Ethylencopolymeren, vorzugsweise einem Ethylen/Vinylacetat-Copolymeren, basiert.

13. Mehrschichtfolie nach einem der Ansprüche 1 bis 12, **dadurch gekennzeichnet, dass** die Dicke der Schicht d) 5 bis 10 µm beträgt.

14. Mehrschichtfolie nach Anspruch 3 oder 12, **dadurch gekennzeichnet, dass** das EthylenNinylacetat-Copolymer bis maximal 30 mol % Vinylacetateinheiten aufweist.

15. Mehrschichtfolie nach einem der Ansprüche 1 bis 14, **dadurch gekennzeichnet, dass** die Schicht e) auf mindestens einem Polyethylen, vorzugsweise auf einer Mischung aus Polyethylenen, auf mindestens einem Polypropylen oder Propylencopolymeren, vorzugsweise Propylen/Ethylen-Copolymeren basiert.

16. Mehrschichtfolie nach Anspruch 15, **dadurch gekennzeichnet, dass** die Schicht e) auf einer Mischung aus m-PE und LLDPE basiert.

17. Mehrschichtfolie nach einem der Ansprüche 1 bis 16, **dadurch gekennzeichnet, dass** die Polyethylenmischung der Schicht e) aus 70-85 Gew. % m-PE und 30-15 Gew. % LLDPE und ggf. bis zu 5 Gew. % üblicher Additive, jeweils bezogen auf das Gesamtgewicht der Schicht e) mit 100 Gew. %, besteht.

18. Mehrschichtfolie nach einem der Ansprüche 1 bis 17, **dadurch gekennzeichnet, dass** die Dicke der Schicht e) mindestens 25 %, vorzugsweise bis zu 30 % der Gesamtdicke der Mehrschichtfolie ausmacht.

19. Mehrschichtfolie nach einem der Ansprüche 1 bis 18, **dadurch gekennzeichnet, dass** die Schicht e) eine Dicke von wenigstens 10 µm, vorzugsweise von 12 bis 20 µm aufweist.

20. Mehrschichtfolie nach einem der Ansprüche 1 bis 19, **dadurch gekennzeichnet, dass** die Mehrschichtfolie ein Reckverhältnis in Längsrichtung von 1:5 bis 1:3 und in Querrichtung von 1:5 bis 1:3 aufweist.

21. Mehrschichtfolie nach einem der Ansprüche 1 bis 20, **dadurch gekennzeichnet, dass** die Mehrschichtfolie eine Schlauchfolie ist.

22. Verwendung einer Mehrschichtfolie nach einem der Ansprüche 1 bis 21 zur Herstellung eines Schlauchbeutels.

23. Schlauchbeutel aus einer Folie nach einem der Ansprüche 1 bis 21.

24. Schlauchbeutel nach Anspruch 23 zum Verpacken von Gütern unterschiedlichster Art, vorzugsweise von Lebensmitteln.

25. Verpackung aus einem Schlauchbeutel nach Anspruch 23 oder 24.

## Claims

1. Biaxially oriented, heat-shrinkable multilayer film encompassing the following layer structure:
a) a surface layer based on at least one olefinic polymer and/or copolymer,
b) a layer based on a mixture composed of an ionomer whose MFI is up to at most 4 dg/min and of an ionomer whose MFI is > 4 dg/min,
c) a barrier layer based on polyvinylidene chloride or on a vinylidene chloride copolymer,
d) a layer based on an ionomer mixture according to layer b) or on an olefinic copolymer,
e) a sealable layer based on at least one polyolefin and/or olefinic copolymer.

2. Multilayer film according to Claim 1, **characterized in that** the layer a) comprises as olefinic polymer a polyethylene, preferably a polyethylene whose density is < 0.92 g/cm³ or m-PE, and/or as olefinic copolymer an ethylene copolymer, preferably an ethylene-vinyl acetate copolymer.

3. Multilayer film according to Claim 1 or 2, **characterized in that** the layer a) is based on a mixture composed of LLDPE and/or m-PE and ethylene-vinyl acetate copolymer.

4. Multilayer film according to Claim 3, **characterized in that** the mixture is composed of from 70 to 90% by weight of LLDPE and/or m-PE, from 10 to 30% by weight of ethylene-vinyl acetate copolymer and optionally up to 5% by weight of conventional additives, based in each case on the total weight of the layer a) with 100% by weight.

5. Multilayer film according to any one of Claims 1 to 4, **characterized in that** the thickness of the layer a) is less than 20% of the total thickness of the multilayer film.

6. Multilayer film according to any one of Claims 1 to 5, **characterized in that** the layer b) comprises as ionomers ethylene-acrylic acid copolymers or ethylene-methacrylic acid copolymers, each of which is present at least to some extent in the form of sodium or Zn salt.

7. Multilayer film according to any one of Claims 1 to 6, **characterized in that** the MFI of the first ionomer is up to at most 2 dg/min and the MFI of the second ionomer is up to at most 5 dg/min.

8. Multilayer film according to any one of Claims 1 to 7, **characterized in that** the mixture of the layer b) is composed of from 35 to 65% by weight of the first ionomer and from 65 to 35% by weight of the second ionomer.

9. Multilayer film according to any one of Claims 1 to 8, **characterized in that** the thickness of the layer b) is from 5 to 10 µm.

10. Multilayer film according to any one of Claims 1 to 9, **characterized in that** the layer c) is based on a polyvinylidene chloride or on a vinylidene chloride-methacrylic acid copolymer.

11. Multilayer film according to any one of Claims 1 to 10, **characterized in that** the thickness of the layer c) is from 3 to 8 µm.

12. Multilayer film according to any one of Claims 1 to 11, **characterized in that** the layer d) is based on an ionomer mixture corresponding to the ionomer mixture of the layer b) or on an ethylene copolymer, preferably on an ethylene-vinyl acetate copolymer.

13. Multilayer film according to any one of Claims 1 to 12, **characterized in that** the thickness of the layer d) is from 5 to 10 µm.

14. Multilayer film according to Claim 3 or 12, **characterized in that** the ethylene-vinyl acetate copolymer has up to at most 30 mol% of vinyl acetate units.

15. Multilayer film according to any one of Claims 1 to 14, **characterized in that** the layer e) is based on at least one polyethylene, preferably on a mixture composed of polyethylenes, on at least one polypropylene or on propylene copolymers, preferably propylene-ethylene copolymers.

16. Multilayer film according to Claim 15, **characterized in that** the layer e) is based on a mixture composed of m-PE and LLDPE.

17. Multilayer film according to any one of Claims 1 to 16, **characterized in that** the polyethylene mixture of the layer e) is composed of from 70 to 85% by weight of m-PE and from 30 to 15% by weight of LLDPE and optionally up to 5% by weight of conventional additives, based in each case on the total weight of the layer e) with 100% by weight.

18. Multilayer film according to any one of Claims 1 to 17, **characterized in that** the thickness of the layer e) makes up at least 25%, preferably up to 30%, of the total thickness of the multilayer film.

19. Multilayer film according to any one of Claims 1 to 18, **characterized in that** the thickness of the layer e) is at least 10 µm, preferably from 12 to 20 µm.

20. Multilayer film according to any one of Claims 1 to 19, **characterized in that** the longitudinal stretching ratio of the multilayer film is from 1:5 to 1:3 and its transverse stretching ratio is from 1:5 to 1:3.

21. Multilayer film according to any one of Claims 1 to 20, **characterized in that** the multilayer film is a tubular film.

22. Use of a multilayer film according to any one of Claims 1 to 21 for the production of a tubular bag.

23. Tubular bag composed of a film according to any one of Claims 1 to 21.

24. Tubular bag according to Claim 23 for the packaging of goods of a very wide variety of types, preferably of food or drink.

25. Packaging composed of a tubular bag according to Claim 23 or 24.

## Revendications

1. Feuille à plusieurs couches, thermorétractable, orientée biaxialement, comprenant la structure de couches suivante :
a) une couche superficielle basée sur au moins un polymère et/ou copolymère oléfinique,
b) une couche à base d'un mélange d'un ionomère présentant un MFI jusqu'au maximum 4 dg/min et d'un ionomère présentant un MFI > 4 dg/min,
c) une couche formant une barrière à base de poly(chlorure de vinylidène) ou d'un copolymère de chlorure de vinylidène,
d) une couche à base d'un mélange d'ionomères selon la couche b) ou d'un copolymère oléfinique,
e) une couche de scellage basée sur au moins une polyoléfine et/ou un copolymère oléfinique.

2. Feuille à plusieurs couches selon la revendication 1, **caractérisée en ce que** la couche a) contient comme polymère oléfinique un polyéthylène, de préférence un polyéthylène présentant une densité < 0,92 g/cm³ ou un m-PE, et/ou comme copolymère oléfinique un copolymère d'éthylène, de préférence un copolymère d'éthylène/acétate de vinyle.

3. Feuille à plusieurs couches selon la revendication 1 ou 2, **caractérisée en ce que** la couche a) est basée sur un mélange de LLDPE et/ou de m-PE et d'un copolymère d'éthylène/acétate de vinyle.

4. Feuille à plusieurs couches selon la revendication 3, **caractérisée en ce que** le mélange est constitué par 70 à 90% en poids de LLDPE et/ou de m-PE, 10 à 30% en poids de copolymère d'éthylène/acétate de vinyle et le cas échéant jusqu'à 5% en poids d'additifs usuels, à chaque fois par rapport au poids total de la couche a) représentant 100% en poids.

5. Feuille à plusieurs couches selon l'une quelconque des revendications 1 à 4, **caractérisée en ce que** la couche a) présente une épaisseur qui est inférieure à 20% de l'épaisseur totale de la feuille à plusieurs couches.

6. Feuille à plusieurs couches selon l'une quelconque des revendications 1 à 5, **caractérisée en ce que** la couche b) contient comme ionomères des copolymères d'éthylène/acide acrylique ou d'éthylène/acide méthacrylique, qui se trouvent à chaque fois, au moins partiellement, sous forme de sel de sodium ou de Zn.

7. Feuille à plusieurs couches selon l'une quelconque des revendications 1 à 6, **caractérisée en ce qu'**un ionomère présente un MFI jusqu'au maximum 2 dg/min et le deuxième ionomère présente un MFI jusqu'au maximum 5 dg/min.

8. Feuille à plusieurs couches selon l'une quelconque des revendications 1 à 7, **caractérisée en ce que** le mélange de la couche b) est constitué par 35 à 65% en poids d'un ionomère et par 65 à 35% en poids du deuxième ionomère.

9. Feuille à plusieurs couches selon l'une quelconque des revendications 1 à 8, **caractérisée en ce que** la couche b) présente une épaisseur de 5 à 10 µm.

10. Feuille à plusieurs couches selon l'une quelconque des revendications 1 à 9, **caractérisée en ce que** la couche c) est à base d'un poly(chlorure de vinylidène) ou d'un copolymère de chlorure de vinylidène/acide méthacrylique.

11. Feuille à plusieurs couches selon l'une quelconque des revendications 1 à 10, **caractérisée en ce que** la couche c) présente une épaisseur de 3 à 8 µm.

12. Feuille à plusieurs couches selon l'une quelconque des revendications 1 à 11, **caractérisée en ce que** la couche d) est à base d'un mélange d'ionomères correspondant au mélange d'ionomères de la couche b) ou d'un copolymère d'éthylène, de préférence d'un copolymère d'éthylène-acétate de vinyle.

13. Feuille à plusieurs couches selon l'une quelconque des revendications 1 à 12, **caractérisée en ce que** l'épaisseur de la couche d) est de 5 à 10 µm.

14. Feuille à plusieurs couches selon la revendication 3 ou 12, **caractérisée en ce que** le copolymère d'éthylène/acétate de vinyle contient jusqu'au maximum 30% en mole d'unités d'acétate de vinyle.

15. Feuille à plusieurs couches selon l'une quelconque des revendications 1 à 14, **caractérisée en ce que** la couche e) est à base d'au moins un polyéthylène, de préférence à base d'un mélange de polyéthylènes, à base d'au moins un polypropylène ou un copolymère de propylène, de préférence à base d'un copolymère de propylène/éthylène.

16. Feuille à plusieurs couches selon la revendication 15, **caractérisée en ce que** la couche e) est à base d'un mélange de m-PE et de LLDPE.

17. Feuille à plusieurs couches selon l'une quelconque des revendications 1 à 16, **caractérisée en ce que** le mélange de polyéthylènes de la couche e) est constitué par 70 à 85% en poids de m-PE et 30 à 15% en poids de LLDPE et le cas échéant jusqu'à 5% en poids d'additifs usuels, à chaque fois par rapport au poids total de la couche e) représentant 100% en poids.

18. Feuille à plusieurs couches selon l'une quelconque des revendications 1 à 17, **caractérisée en ce que** la couche e) représente au moins 25%, de préférence jusqu'à 30% de l'épaisseur totale de la feuille à plusieurs couches.

19. Feuille à plusieurs couches selon l'une quelconque des revendications 1 à 18, **caractérisée en ce que** la couche e) présente une épaisseur d'au moins 10 µm, de préférence de 12 à 20 µm.

20. Feuille à plusieurs couches selon l'une quelconque des revendications 1 à 19, **caractérisée en ce que** la feuille à plusieurs couches présente un rapport d'étirement dans le sens longitudinal de 1:5 à 1:3 et dans le sens transversal de 1:5 à 1:3.

21. Feuille à plusieurs couches selon l'une quelconque des revendications 1 à 20, **caractérisée en ce que** la feuille à plusieurs couches est une feuille formant un tuyau souple.

22. Utilisation d'une feuille à plusieurs couches selon l'une quelconque des revendications 1 à 21 pour la préparation d'un sac souple tubulaire.

23. Sac souple tubulaire réalisé en une feuille selon l'une quelconque des revendications 1 à 21.

24. Sac souple tubulaire selon la revendication 23 pour l'emballage de produits de types différents, de préférence d'aliments.

25. Emballage en un sac souple tubulaire selon la revendication 23 ou 24.
